(19) **Europäisches Patentamt European Patent Office Office européen des brevets**

(11) **EP 4 693 919 A2**

(12) **EUROPEAN PATENT APPLICATION**

(43) Date of publication:
**11.02.2026   Bulletin 2026/07**

(51) International Patent Classification (IPC):
**H04B 7/022** (2017.01)      **H04B 7/024** (2017.01)
**H04B 7/06** (2006.01)

(21) Application number: **25186637.2**

(22) Date of filing: **01.07.2025**

(52) Cooperative Patent Classification (CPC):
**H04B 7/024; H04B 7/0617**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority:   **07.08.2024   US 202418796364**

(71) Applicant: **INTEL Corporation Santa Clara, CA 95054 (US)**

(72) Inventors:
- **CHEN, Kuilin Clark**
  **Portland (US)**
- **HEWAVITHANA, Thushara**
  **Chandler (US)**
- **KRISHNAMURTHY, Sundar**
  **Dublin, 94568 (US)**
- **LU, Lu**
  **Hillsboro, 97124 (US)**

(74) Representative: **Viering, Jentschura & Partner mbB**
**Patent- und Rechtsanwälte**
**Am Brauhaus 8**
**01099 Dresden (DE)**

(54) **SYSTEM AND METHODS FOR CLUSTERING, USER ASSOCIATION AND POWER CONTROL TO ENABLE COHERENT JOINT TRANSMISSION**

(57)     According to various examples, a radio access network controller is described comprising a processor configured to determine whether a mobile terminal is located at a center region of a radio cell of a communication network or an edge region of the radio cell, and control the communication network to serve the mobile terminal by a plurality of radio units of a plurality of radio cells using coherent joint transmission by allocating the same time, frequency, code and spatial resources, if the processor determines that the mobile terminal is in the edge region of the radio cell and control the communication network to serve the mobile terminal by one radio unit of the radio cell using single-cell processing if the processor determines that the mobile terminal is in the center region of the radio cell.

## FIG 10

1000

**Description**

**Technical Field**

Exemplary implementations described herein generally relate to systems and methods for clustering, user association and power control to enable Coherent Joint Transmission.

**Background**

Distributed MIMO or Joint Massive MIMO is one of the key technologies in 5G-Advanced and 6G to achieve high system performance with Co-ordinated Multi-Point (CoMP) transmission and reception schemes. To this end, Coherent Joint Transmission (CJT) methodologies are defined in 3GPP Rel18 and 19 standards. In such joint processing paradigms, multiple Radio Units (RUs) or Transmit-Receive Points (TRPs) use the same time-frequency resource to perform joint transmission or reception to specific User Equipment (UE) and reduce inter-UE or inter-cell interference. With reduced interference, such joint processing helps in improving the cell edge Signal to Interference Plus Noise Ratio (SINR) substantially and effective user perceived throughput. Distributed Unit (DU) or Central Unit (CU) then coordinates the scheduling to enable joint transmission of same data using multiple RUs.

Coherent Joint Transmission (CJT) methodologies being standardized in 3GPP standards are focused on precoding schemes and synchronization aspects needed for enabling Inter-site CJT. While Intra-site CJT with ideal backhaul has been standardized already in Release 18 of 3GPP, various aspects are being standardized now for Inter-site CJT with nonideal backhaul, as part of Release 19 standards. Approaches for user association, handover and power control procedures which allow fully realizing the benefits of joint processing are desirable.

**Brief Description of the Drawings**

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:

Figure 1 illustrates coherent joint transmission.
Figure 2 shows a cell layout.
Figure 3 illustrates global clustering of cells.
Figure 4 illustrates local clustering of cells.
Figure 5 shows an exemplary scenario of UE-RU association when a user is moving across multiple RUs.
Figure 6 shows a diagram illustrating UE-RU association and handoff based on location and RSRP (Reference Signal Received Power).
Figure 7A, 7B illustrates the benefits of coherent joint processing on the uplink.
Figure 8 shows a radio access network controller according to an aspect of this disclosure.
Figure 9 shows a mobile terminal according to an aspect of this disclosure.
Figure 10 shows a flow diagram illustrating a method for controlling a communication network according to an aspect of this disclosure, e.g. performed by a radio access network controller.
Figure 11 shows a flow diagram illustrating a method for using a communication network by a mobile terminal.

**Description of Exemplary Implementations**

The following detailed description refers to the accompanying drawings that show, by way of illustration, specific details and aspects of this disclosure in which the invention may be practiced. Other aspects may be utilized, and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

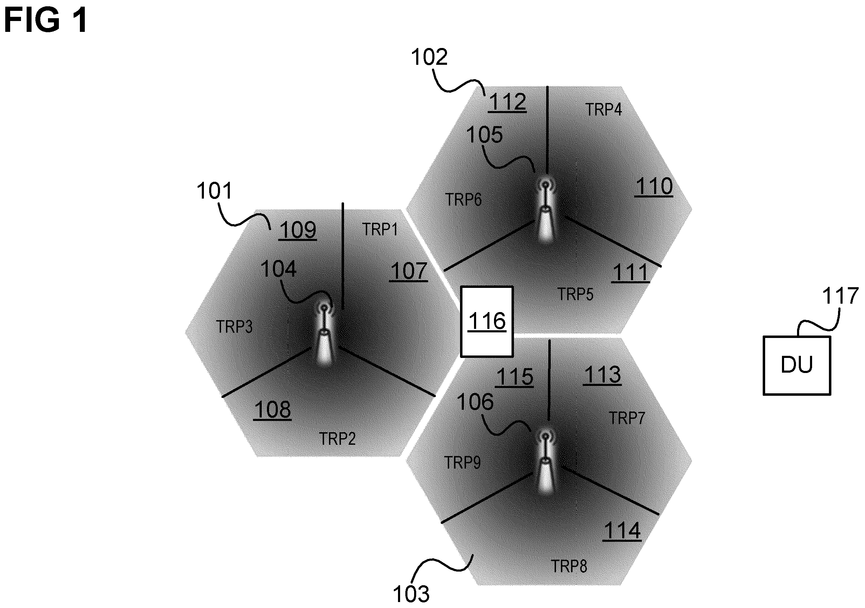

Figure 1 illustrates coherent joint transmission.

In the example of figure 1, there are three radio cells 101, 102, 103, each being operated by a respective base station 104, 105, 106 of a radio access network (RAN) of a communication network. Further, in the example of figure 1, each radio cell 101, 102, 103 is divided into three sectors 107-115, wherein each sector is served by a respective TRP (transmission-reception point), also denoted as radio unit (RU) of the respective base stations 104, 105, 106.

For example, a baseband unit (BBU) may operate in the cloud and may split to a Control Unit (CU) (e.g. O-CU) mainly responsible for non-real time operations hosting the radio resource control (RRC) and the control plane of the PDCP protocol and a Distributed Unit (DU) (e.g. O-DU) mainly responsible for real-time operations hosting, for example, RLC layer functions, MAC layer functions, and Higher-PHY functions. Radio units (RUs) (e.g. O-RU) hosting the Lower-PHY functions may receive radio communication signals from terminal devices and provide data streams to the DU over a fronthaul interface (e.g. open fronthaul). In this context, each O-RU and O-DU may be coupled with one-to-one mapping. In systems such as Co-ordinated Multipoint (COMP), Cell-free Massive MIMO, Distributed Antenna Systems and Network MIMO, improvements in terms of capacity may be obtained by each O-DU performing joint processing of the signals received from multiple O-RU.

With Coherent Joint Transmission (CJT), a UE 116 could be served by the TRPs of multiple base stations 104, 105, 106, in this example TRP1 (of the first base station 104), TRP5 (of the second base station 105) and TRP9 (of the third bast station 106). This means that in the case of uplink, data as well as channel state information of the TRPs i.e. TRP1, TRP5 and TRP9 in the present example are received from the UE 116 and provide the data to a distributed unit 117 (which may be in one of the base stations 104, 105, 106 or located elsewhere) which demodulates the data (using the signals received by all the TRPs) and sends it to the core network. In the case of downlink, the distributed unit 117 provides the data to be sent to the UE 116 to the co-ordinating TRPs (i.e. TRP1, TRP5 and TRP9 in the present example) and the TRPs send it to the UE 116, wherein the DU 117 for example performs precoding to achieve joint beamforming among the TRPs. In other words, the DU 117 performs joint processing for the TRPs (TRP1, TRP5 and TRP9) to serve the UE 116 (in uplink as well as downlink). Since the TRPs (TRP1, TRP5 and TRP9) serving the UE 116 belong to different cells 101, 102, 103, the CJT mechanism of figure 1 is termed as inter-site CJT. When the UE is served by TRPs of the same cell, this is termed as intra-site CJT. When a single TRP serves a UE, it is denoted as single cell processing while "joint processing" is used to refer - unless stated otherwise - to refer to both inter-site CJT and intra-site CJT, i.e. to a joint processing for TRPs belonging to same or different radio cells.

Serving a UE 116 by multiple TRPs, i.e. using Coherent Joint Transmission (CJT) enables Distributed or Massive MIMO (each RU and the UE 116 may have multiple antennas) to improve system capacity, in particular in the context of 5G-Advanced, 6G and beyond. Interference can be controlled substantially since numerous physically distributed Radio Units (RUs) or TRPs use the same time-frequency resource with joint beamforming and processing (e.g. performed by the DU 117 as described above). Diversity gains can also be leveraged owing to the antennas not being collocated. Within the 3GPP context, this refers to Coherent Joint Transmission (CJT) realized through Multi-TRP transmission schemes.

In the context of CJT, UEs need to be dynamically associated to RUs by the network scheduler i.e. it needs to be decided which RUs serve a specific UE (e.g., TRP1, TRP5 and TRP9 serve the UE 116 in the example of figure 1). Accordingly, a scheme for UE association to RUs is needed for enabling CJT. Since a UE is typically moving, suitable handover procedures (e.g. between sets of RUs serving the UE) need to be adapted for CJT. Further, the powers of the TRPs serving a UE may be controlled individually. Therefore, power control mechanisms for efficient joint processing are desirable considering both single cell processing and CJT.

UE association can be done in a UE centric manner where each UE (freely) chooses the strongest TRPs to perform (coherent) joint transmission. However, such UE centric association may necessitate near-universal routing of data and channel information among arbitrary sets of TRPs (since the UE may choose any combination of TRPs) which may not be realizable in practice. Further, from RAN perspective, performing joint processing for all UEs that are in its coverage area would increase both computational complexity as well as fronthaul bandwidth tremendously. This may not be feasible in terms of costs and achievable system capacity with the bandwidth and numerology considered in 5G-Advanced and 6G designs. On the other hand, single cell processing with or without additional pico or femto cells does not provide the high spectral efficiency with limited complexity and latency.

In view of the above, according to various aspects of this disclosure, an approach is provided to methodically distinguish cell-center and cell-edge users and perform joint processing (CJT) selectively for cell-edge users to maximize the system capacity. Further, according to various aspects of this disclosure, locality-based clustering of TRPs and approaches for handover and power control are provided to perform joint processing effectively.

According to various aspects of this disclosure, a system and methods for joint processing with user association, handover and power control procedures are provided which are based on one or more of: Reference Signal Received Power (RSRP), Signal to Interference Plus Noise Ratio (SINR), predicted throughput of multiple RUs and location of the UEs.

According to various aspects of this disclosure, this enables Distributed or Joint Massive MIMO through Coherent Joint Transmission with user association, handover and power control schemes that help achieve superior user throughput while maintaining RU and DU processing at low complexity. To this end, according to various aspects of this disclosure, users are classified as cell-center UE and cell-edge UE based on measurements of one of the following from multiple TRPs: RSRP, SINR, predicted throughput or location. Suitable boundary conditions and thresholds are defined for single-TRP vs multi-TRP processing using variation coefficients. Joint processing is subsequently enabled only for cell edge UE while single cell processing is performed for all UEs identified to be cell center. Handover and power control procedures may involve transitioning between multiple clusters of TRPs called TRPSets, including both single TRP and multi-TRP transmission. According to various aspects of this disclosures, a "local clustering" clusters adjacent TRPs (typically 2-4 TRPs) to minimize the amount of data routing while maximizing the system capacity.

The local clustering is reflected in the architecture of the network, e.g. by physical connectivity between the DUs of the cluster (e.g. of the base station to which the TRPs of the cluster belong), or a co-located DU for a cluster (as in the case of figure 1 where the DU 117, e.g. located in a further base station, is shown separately from the base stations 104, 105, 106), as well as the data flows of the DUs of the same cluster (in base stations 104, 105, 106 or the further base station, depending on whether there is an extra DU as in the example of figure 1). A network planning and orchestration layer may set a fixed association of RUs with clusters and for example inform Layer 1 and Layer 2 components of the mobile communication network accordingly.

It should be noted that various Co-ordinated Multipoint (CoMP) schemes were introduced in LTE (Long Term Evolution), but the technology was not widely adopted in practice due to several reasons. RAN architecture was more distributed before CRAN (cloud radio access network) became prevalent, fronthaul limitations caused concerns on sharing data and channel state information and further cell-specific reference signals made the scheduling harder for Multi-TRP processing. However, in the context of 5G NR, CRAN architecture became prevalent, fronthaul bandwidth were improved and there are no cell-specific reference signals affecting the scheduling.

In Release 16-17 of (3GPP) 5G NR, Non-Coherent Joint Transmission (NCJT) was standardized wherein multiple TRPs transmitted distinct layers or streams of data to the same UE. Latency considerations were not substantial since transmitted data from different RU were independent streams. In Release 18 of 5G NR, Coherent Joint Transmission (CJT) was standardized with ideal backhaul where the coordinating TRPs are collocated (i.e. are part of the same base station, i.e. belong to the same radio cell). This is also termed Intra-site CJT, wherein multiple TRP (typically 2 or 3) could jointly transmit or receive same data to a specific UE with coordinated scheduling and using appropriate precoding. Note that while Intra-site CJT helps in partially improving system performance by reducing inter-sector interference, it does not help with cell edge performance.

In Release 19 of 5G NR, joint processing with Inter-site CJT is being standardized to remove the deleterious effects of the cell edges. Through joint processing across physically separated TRPs (i.e. TRPs belonging to different cells, i.e. located in different base stations), inter-cell interference can be reduced considerably. This also serves as a stepping stone for Cell-free Massive MIMO wherein the limitations of cell edges are taken away. Realizing such Inter-site CJT however has tighter synchronization requirements on timing, phase, and frequency offsets among multiple TRPs that are coordinating the joint transmission. Various standardization efforts are ongoing towards UE assisted calibration of offsets between signals from multiple TRP. Furthermore, the unified Transmission Configuration Information (TCI) framework has been extended for Multiple-TRP processing towards necessary signaling and sharing information on channel state information (CSI).

While synchronization and signaling aspects are important for realizing Inter-site CJT, Radio Access Network (RAN) architecture and complexity need to be considered for effective realization of Distributed MIMO in practice. In view of the above, various aspects of this disclosure relate to Multi-TRP clustering, user association along with handover procedures, and power control. It should be noted that herein, if it is said that the communication system performs a function, this may be done on the UE side as well as on the communication network side (i.e. by a component of the communication network, in particular the radio access network), or by both in combination.

Herein, Coherent Joint Transmission (CJT) is used to denote joint processing of signals for multiple TRPs on both uplink (UE to TRPs) and downlink (TRPs to UE). While some procedures are defined primarily in the context of uplink, similar approaches are applicable to downlink as well. For example, RSRP or SINR could be based on the reference signals such as Sounding Reference Signal (SRS) or Demodulation Reference signal (DMRS) for uplink joint reception or based on reference signals such as Synchronization signal (SS) or Channel state information Reference Signal (CSI-RS) for downlink joint transmission. Hence, joint downlink transmission and joint uplink reception at the RAN side (RUs or DUs) are not distinguished explicitly herein (but are both referred to by "joint transmission" and - with regard of the processing of the received and sent signals - "joint processing").

Further, coherent joint transmission procedures defined in 3GPP are similar for Frequency Domain Duplexing (FDD) or Time Domain Duplexing (TDD) systems. These may be denoted as FDD-CJT or TDD-CJT and are similar in terms of several procedural aspects. One key aspect in the case of TDD systems is that due to channel reciprocity, sounding on the uplink (SRS) also helps in determining the downlink channel state information (CSI). CJT may leverage this as well.

There are several approaches for performing Joint processing to realize the benefits of Distributed Massive MIMO. With Single cell processing as in a CRAN or ORAN (Open Radio Access Network) architecture, SINR is weak at the cell edges due to pathloss and interference among signals from the neighboring cells. A cell layout with hexagonal pattern and three sectors per cell (as in the example of figure 1) may result in regions of very low SINR.

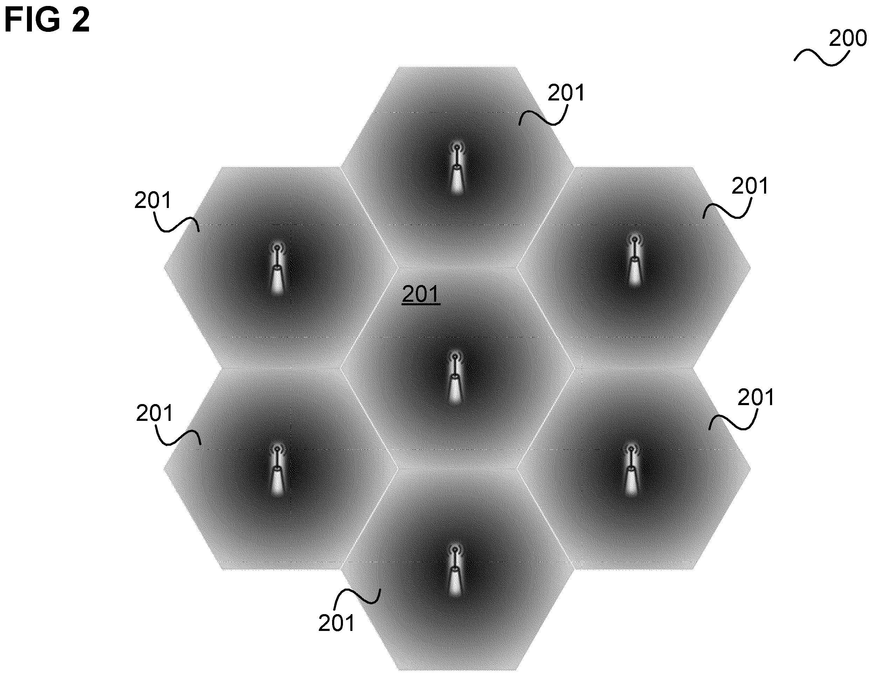

Figure 2 shows a cell layout 200 with hexagonal radio cells 201 wherein areas of high SINR are shown in black color while areas with lower SINR are shown in gray color. The areas with lowest SINR are in between every three adjacent cells, shown in white 201.

Employing small cells (Femto or Pico RU) could partially alleviate the issue of areas with low SINR but this approach solution is poorly scalable owing to infrastructure and resource challenges and does not guarantee high spectral efficiency for cell edge users.

Various aspects of this disclosure, towards efficient realization of joint processing, consider two main clustering approaches, global clustering and local clustering.

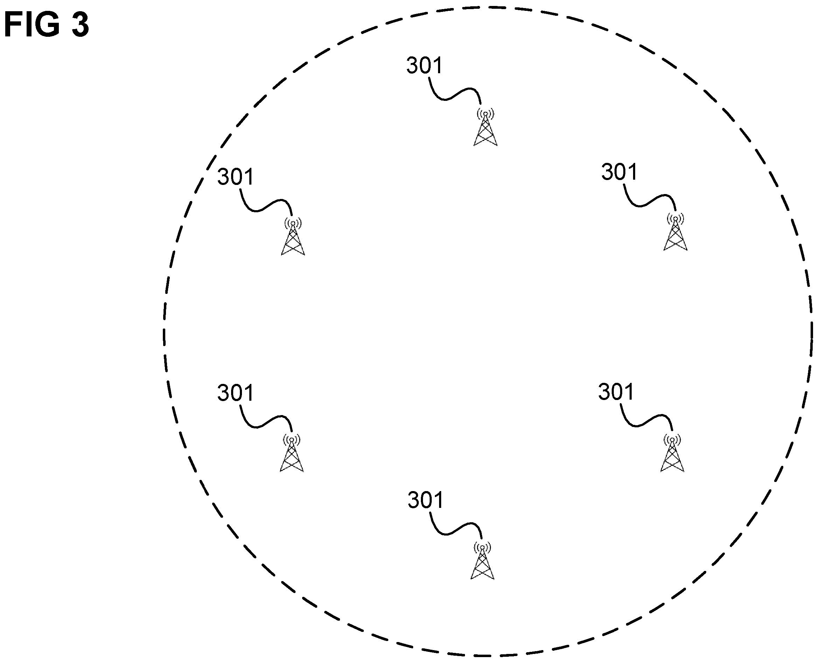

Figure 3 illustrates global clustering for a case of seven cells (operated by seven base stations 301).

Global clustering includes joint processing of signals across all N cells (N=7 in the example of figure 3) and, e.g. all three sectors of all cells. This may be well-suited for various use cases such as stadiums, indoor environments, offices, malls, industries, hospitals etc.

Assuming three sectors per cell, joint processing with global clustering between all 21 RUs with seven cells can help to achieve near uniform spectral efficiency. With such global clustering of a network, signals from multiple RUs are routed to a central DU for joint transmission and reception, enabling distributed Massive MIMO. If timing and phase synchronization can be achieved with high precision, substantial throughput improvements can be achieved with multiuser beamforming and scheduling.

However, with global clustering, there are several implementation challenges in terms of sharing information from all RUs to one central DU. This poses tougher latency constraints and worsens the implementation complexity due to baseband processing for all RUs in a joint manner. It would be quite challenging to perform joint processing with large matrices and meet the 1ms or 0.5ms processing timeline needed in 5G NR. Further, infrastructure upgrade in the form of optical fibers for carrying data, control and synchronization signals become challenging as the layouts of RUs and DUs evolve over time.

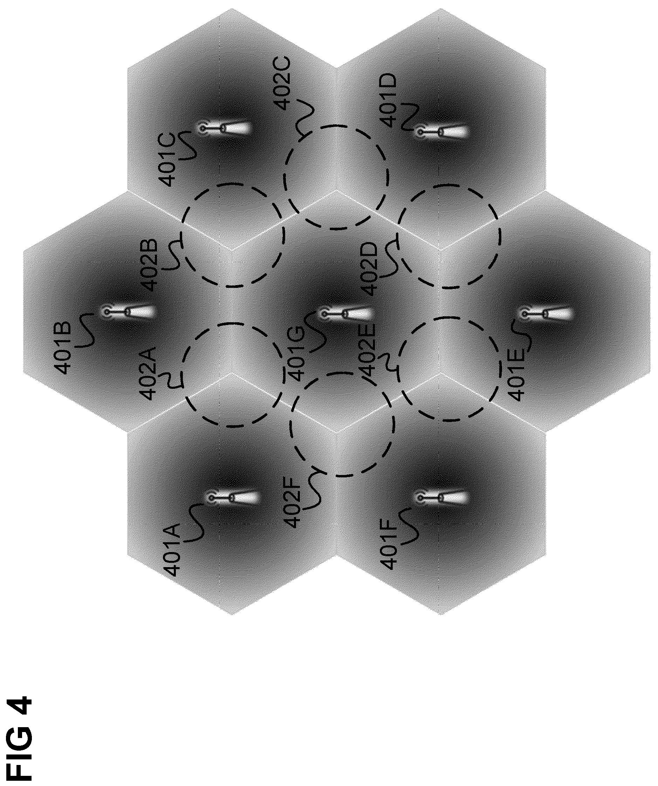

Figure 4 illustrates local clustering for a case of seven cells (operated by seven base stations 401).

Local clustering may for example be beneficial in the case of general macro-outdoor environment where the communication network performs joint processing for a UE across two, three or four RUs nearest to the UE (while the number of cells N can be arbitrarily large) since this can be expected to be sufficient to remove the deleterious effects of the cell edges. Local clustering thus refers to forming predefined set of coordinating adjacent RUs (i.e. RUs which are configured to together serve a UE, e.g. by connecting them accordingly and providing them with a DU performing the joint processing). This allows achieving high communication quality also at cell edges while limit the number of coordinating TRPs and cells (as in the global clustering where TRPs of a high number of cells serve UEs). It should be noted that the (local) clusters of coordinating cells or RUs could be overlapping.

In the local clustering, joint processing is thus for example performed among three TRPs of three neighboring (i.e. adjacent) cells (e.g. adjacent sectors of different cells) to improve cell edge SINR. The predefined TRP sets which may together serve a UE are called clusters or TRP sets interchangeably and refer to neighboring RUs that can phase synchronize and co-ordinate their transmission. In figure 4, circles 402 represent the areas (referred to as CJT regions) where UEs are served by a TRP set of three TRPs. These areas are for example the areas of lowest SINR. In this example, a respective DU can perform the joint processing for each of the six CJT regions (i.e. different DUs perform the joint processing for different ones of the CJT regions). This alleviates the processing load greatly to meet the processing timeline (typically 1ms). To facilitate this, each of the CJT regions may involve one of the three neighboring cells acting as a master and coordinating the timing and phase synchronization among three RUs to enable CJT considering the directionality of the sectors. Resource allocation and power control help in controlling the dimensions of the CJT regions.

Although local clustering facilitates distribution of DU processing across multiple cells, the distribution is not necessary. This means that if certain DUs can be configured to take high processing load and fronthaul bandwidth allows, those DUs can perform centralized DU processing and process data from multiple TRP sets. It should be noted that that each hexagonal cell has six neighboring cells and, as in the above example, three sectors. Hence, centralized DU processing is for example be configured for a maximum of 6x3+3 = 21 TRPs. Although in theory, data from more than this number of TRPs could be processed in a centralized location (i.e. one DU), fiber bandwidth and routing limitations can be expected to be a significant challenge in practical deployments. So, one or more arbitrary sets of three TRPs may be chosen out of the above 21 TRPs for joint processing in one DU (i.e., 3,6,9,12,15,18,21 TRPs) and the pattern of TRPs processed together in one DU could be repeated for covering a much wider coverage area.

It should be noted that local clustering of TRPs denotes that two, three or four adjacent TRPs (i.e. TRPs of adjacent cells or sectors) co-ordinate to perform joint transmission whereas signal processing (i.e. the joint processing) could still be combined in a centralized DU (like DU 117 in the example of figure 1). Such a localized approach thus translates to a combined processing of three distinct TRP signals (each requiring handling of a 24x24 matrix for eight layers of 5G NR) as opposed to the global clustering over, in the example of figure 3, seven cells with 3 sectors each (requiring handling of a single large 168x168 matrix for 8 layers) which would not be practical.

It should further be noted that the local clustering approach mainly benefits from the locality assumption where the two or three TRPs nearest to a UE are chosen for joint processing and signals from TRPs farther away contribute to negligible interference. Typically, with a three-sector layout in seven hexagonal cells, six CJT regions (as in figure 4) help remove cell edge effects. Further, the communication network may perform joint processing for cell edges between two adjacent CJT regions (and thus between two cell sectors) in a similar manner but with only two TRPs of a TRP set (including the TRPs of the two cell sectors) being active and adapting the power control loops or precoding to turn off signal transmission from the third TRP of the TRP set. This ensures that the system performance is maximized and near uniform communication quality across all cell edges in a traditional RAN architecture can be achieved.

According to various aspects of this disclosure, a user association strategy is provided which includes classifying UEs as either cell center UE or cell edge UE based on one of several metrics. Depending on the classification, Joint processing (i.e. serving by multiple TRPs) is enabled only for cell edge UEs and single-cell processing is performed for cell UEs. This allows substantial RAN implementation complexity savings along with fronthaul or backhaul traffic reduction (compared to using joint processing for all UEs). According to various aspects of this disclosure, procedures for the user association strategy are defined in the context of 3GPP but can also be extended to other wireless systems employing coverage patterns like cellular systems.

According to various aspects of this disclosure, in case the mobile communication network uses global clustering (joint processing of not only TRPs of adjacent sectors, e.g. in a certain part of its coverage area), UEs are associated to RUs such that each UE is associated with (i.e. served by) at least one RU. Selection of TRP sets for UEs (for the cell edge UEs) is then for example based on fixed TRP sets (i.e. clusters of non-adjacent TRPs) or a dynamic user-centric approach where a UE may freely choose TRPs. The RU-DU association (i.e. which DU performs processing for which RU) may also be either pre-defined or the communication network may use an approach which allows reconfiguration of the RU-DU association, e.g. based on specific DU processing capacity. Various UE selection of RUs and RU-UE association methods for determining the TRPs for each UE, can be used in the case of global clustering. An exemplary association algorithm is given in the following.

For the association algorithm, it is assumed that each RU should serve $K_u$ UEs. The algorithm includes the following.

- For fairness, to guarantee that each UE is served at least by one RU, let each UE choose one RU first. When a UE chooses an RU, it first chooses the one which has the largest SINR (in round-robin manner). If the RU has already be chosen by $K_u$ other UEs, the UE chooses the second-best RU (in terms of SINR), etc. The order in which the UEs choose RUs can be randomized to further guarantee fairness.
- After each UE has chosen at least one RU (for serving it), UEs can continue choosing RUs until the limitation (each RU chosen by $K_u$ UEs) is met. Different criteria can be applied here. For instance, each UE can choose an additional RU with which it receives with the highest RSRP or SINR. Again, a round-robin approach can be used.

After the communication system has determined the UE-RU association, e.g. in the above manner, the RUs conduct processing according to it. The mobile communication network may apply dimension reduction to meet front-haul limitations, e.g. by conducting beam compression or conducting equalization directly at RUs. For both options, the DU performs further processing wherein it demodulates symbols and generates Log Likelihood Ratios (LLR).

According to various aspects of this disclosure, each UE compares the RSRP of a serving RU with L-1 neighbor (adjacent) RUs' RSRP to determine whether the communication network assigns, for a specific TRP set all power to a single RU or splits power between up to L (e.g. 2 or 3 or 4) RUs within the TRP set (wherein L is the maximum TRPs of each TRP set). The communication network or the UE may use a coefficient of variation to distinguish the cases of the UE being a cell edge UE and a cell center UE as described below. The communication network or the UE may perform a similar comparison to trigger handover of the UE from one TRP set to another TRP set. As a UE moves through the cells, a typical series of serving modes for the UE (e.g. series of Radio Resource Control or RRC state transitions) is for example as follows:

Single TRPS1 (i.e. served by one TRP of the TRP set 1) -> Multi TRPS1 (i.e. served by more than one, e.g. all TRPs of TRP set TRPS2) -> Handover -> Multi TRPS2 -> Single TRPS2 -> Multi TRPS2 -> Handover
wherein TRPS1, TRPS2 refers to two TRP sets (i.e. clusters), each consisting of multiple adjacent TRPs.

The communication network may use single or multiple Downlink Control Information (DCI) translating to single or multiple Physical Downlink Control Channel(s) (PDCCH) to realize the transitions, as both are supported in 3GPP for Multi-TRP processing. For each TRP, the communication network may choose the DU for performing the joint processing for the TRP set as one among several possibilities to manage the processing load.

In the following, different metrics that the UE or the communication network may use for UE-RU association and handover procedures are explained in detail.

According to various aspects of this disclosure, the communication system uses the Reference signal received power (RSRP) of multiple TRPs (i.e. as observed by the UE from reference signal reception from multiple TRPs) to deduce a variation measure such as a coefficient of variation (i.e. a value indicating a degree of differences of a signal quality with which the UE receives signals from different TRPs) to classify a UE as cell center UE or cell edge UE. The communication system (or its operator) chooses a suitable threshold so that the UEs are classified as cell center if the coefficient of variation is high, and users are classified as cell edge UEs otherwise. Other measures of variation of RSRP may be used interchangeably. It should be noted that for classifying a UE based on the coefficient of variation, the communication system compares whether the standard deviation is at least the average RSRP scaled by a threshold value, i.e., decides whether the UE is at the cell center (where RSRPs differ strongly between the TRPs) by determining whether:

$$RSRP_L \text{ Coefficient of variation} = (\text{Standard deviation of L RSRP})/(\text{Mean of L RSRP}) > JP\_RSRP\_Threshold$$

wherein $RSRP_L$ Coefficient of variation, $L \varepsilon \{1,2,3,4\}$, denotes the RSRP based coefficient of variation considering L TRPs of a TRP set.

In terms of RSRP, the communication system may use synchronization signal (SS) based SS-RSRP or Channel state information (CSI) reference signal-based CSI-RSRP for the above determination of the coefficient of variation. CSI-RSRP involves linear averaging of received power across all subcarriers with CSI-RS. Further, the communication system may also use Received Signal Strength Indicator (RSSI) or Reference Signal Received Quality (RSRQ) for deducing a similar variation measure such as the coefficient of variation. Still, the communication system classifies a UE as cell center UE or cell edge UE based on checking if the variation measure is above or below a configurable threshold.

According to another aspect of this disclosure, the communication system uses SINR measurements from multiple TRPs to classify UE as cell edge UEs and cell center UEs, wherein it may measure SINR based on various reference signals (e.g. Sounding Reference Signal or Demodulation reference signal on uplink or SS and CSI-RS on downlink) and for the entire band or for selected resource blocks (RBs). Similar to the RSRP based classification, the communication system may calculate a coefficient of variation for L different SINR measurements, wherein L SINR values denote the SINR measured at the UE for L different TRPs and, for checking whether a UE is a cell center UE, determines whether

$$SINR_L \text{ Coefficient of variation} = (\text{Standard deviation of L SINR})/(\text{Mean of L SINR}) > JR\_SINR\_Threshold$$

wherein $SINR_L$ Coefficient of variation, $L \varepsilon \{1,2,3,4\}$ denote the SINR based coefficient of variation considering L TRPs of a TRP set.

Cell edge UEs typically have a low coefficient of variation in both RSRP or SINR as compared to cell center UEs. Hence, the communication system may use suitable thresholds on (RSRP based or SINR based) variation measures to distinguish cell edge and cell center UEs. The communication system may further whiten the interference before estimation of the SINR and perform appropriate filtering of RSRP or SINR to consider wideband or sub-band metrics.

In order to calculate SINR per TRP, the communication system may use the Minimum Mean Squared Error (MMSE) solution based on estimated channel coefficients. This could also involve interference whitening to improve performance. The communication system may determine the SINR based on the diagonal elements of the MMSE or other similar channel covariance matrix. The inverted MMSE channel covariance matrix is typically defined as follows:

$$MMSE\_matrix = inv(H'\, R\, H + I)$$

wherein H denotes the NxM channel matrix with M layers or streams (e.g. as defined in the respective standards) and R is the NxN interference plus noise covariance matrix found using various reference signals defined earlier. I denotes the MxM identity matrix and H' denotes the Hermitian conjugate of H. The communication system can then use diagonal elements of the inverse matrix to deduce the SINR as follows

$$SINR = real(1./diag(MMSE\_matrix)) - 1$$

wherein diag represents the diagonal elements extraction of the MMSE matrix and 1./diag(.) denotes the element-wise reciprocal of the diagonal element vector diag(.). It should be noted that that this represents only one methodology to deduce SINR, while the communication system may also use other methods using explicit computation of signal, noise and interference power. The communication system may use different averaging or filtering approaches to improve the SINR estimate. Further, the communication system may use both sub-band and wideband SINR metrics for deciding whether to employ joint processing.

According to another aspect of this disclosure, the communication system may predict system throughput (i.e. capacity) from the SINR and compare it between single cell and joint cell processing and used to classify cell center and cell edge users. Using the SINR calculated as shown above, the communication system may calculate system capacity per TRP denoted as C using the following expression

$$C = log2(1+SINR)$$

The communication system may then compare system capacity (i.e. throughput), e.g. calculated as above, of single cell processing with that of joint processing for a UE to associate the UE to a specific TRP based on whether joint processing improves the system throughput for the UE or not.

According to another aspect of this disclosure, the communication system may directly use the location of the UEs to classify them as cell center UEs and cell edge UEs and select UEs for single cell processing or joint cell processing, depending on this classification. The communication system may determine the location based on the RSRP or Time Difference of Arrival (TDoA) or Angle of Arrival (AoA) techniques, e.g. based on positioning reference signals.

According to another aspect of this disclosure, the communication system may perform UE-RU association jointly performed with resource allocation for joint processing and may employ Artificial Intelligence techniques such as Reinforcement Learning to efficiently allocate resource blocks for CJT. It may use various metrics discussed above such as RSRP, SINR, predicted throughput and location to augment the performance of such machine learning based approaches for association and resource allocation.

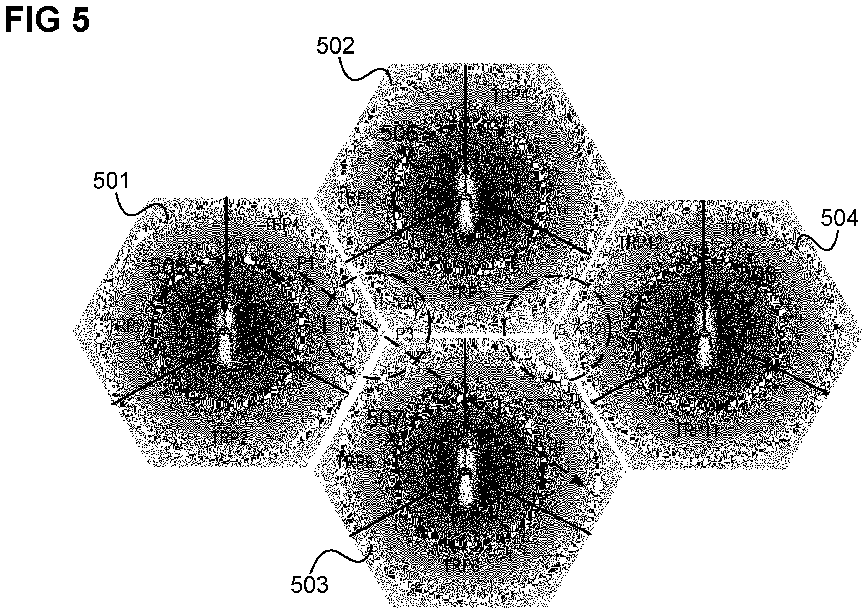

Figure 5 shows an exemplary scenario of a hexagonal cell pattern layout with four radio cells 501-504 operated by base stations 505-508 each having three sectors and thus including of twelve TRPs (denoted TRP1 to TRP12) in total. Cell centers (near base stations 505-508) have strong TRP signal strength, while cell edges (near boundaries between the radio cells) have low TRP signal strength. Similarly to the circles 402 in figure 4, two circles represent joint processing regions wherein three adjacent (Inter-site) TRPs perform joint processing. The TRPs TRP1, TRP5 and TRP9 (also denoted as the TRP set {1, 5, 9}) form one of the joint processing regions and TRP5, TRP7 and TRP12 (also denoted as the TRP set {5, 7, 12}) form the other of the joint processing regions.

As mentioned above, such multi-TRP processing with inter-site TRPs, (i.e. TRPs of different cells) is referred as Inter-site CJT, and has challenging synchronization requirements while the multi-TRP set {1,2,3} (including TRP1, TRP2 and TRP3 all belonging to the same radio cell 501) refers to Intra-site CJT. Although not shown in figure 5, every intersection of three sectors could have joint processing (i.e. for inter-site CJT), removing the deleterious effects of most cell edge regions. Without loss of generality, four DUs are assumed to process each of the four radio cells 501-504 (hexagonal regions) with ability to perform both single TRP and multi TRP processing adaptively.

For example, a UE follows a motion trajectory 511 which includes location P1 to P5. As described above, depending on RSRP or SINR measurements at the UE or positioning of the UE (e.g. based on reception of positioning reference signals at the UE), the communication system chooses a mode with which the communication network (i.e. the network side of the communication system) serves the UE (in particular, whether to serve it by single cell processing or joint processing). It should be noted that although the cells 501-504 are shown with a regular hexagonal pattern in figure 5, actual distribution of RSRP at different locations may vary, leading to an irregular non-hexagonal pattern.

In the example of figure 5, at position P1, the communication network serves the UE by TRP1 in single TRP processing mode, due to the strong RSRP / SINR.

At position P2 the communication network serves the UE by the TRP set {1,5,9} (i.e. TRP set with multiple TRPs, therefore also denoted as "multi-TRP set") in joint processing mode (i.e. Multi-TRP processing). The coefficient of variation of three RSRPs or three SINRs corresponding to TRPs {1,5,9} falling below a predefined threshold triggers a transition from the Single-TRP to the Multi-TRP processing.

At position P3, the communication network still serves the UE by a multi-TRP set {1,5,9} in joint processing mode. However, the RSRP difference between TRP 1 and 9 crossing a certain handoff threshold triggers a handover procedure. The communication network accordingly changes the serving RU from TRP 1 to TRP 9 and resource allocation based on the successful completion of the handover procedure. It should be noted that the communication network would also change the DU for the UE (i.e. doing the processing for communication with the UE) since TRP 1 and TRP 9 are not co-located.

At position P4, the communication network serves the UE with TRP9 in single TRP processing mode, due to the strong RSRP or SINR. The coefficient of variation of three RSRPs or three SINRs corresponding to TRPs {1,5,9} exceeding a predefined threshold triggers the transition from Multi-TRP to Single-TRP processing.

At position P5, the communication network serves the UE by TRP7 in single TRP processing mode, due to a strong RSRP or SINR.

It should be noted that the communication system does not need to exclusively base the transition from Single-TRP to Multi-TRP processing, on a measure of variation of RSRP or SINR measurements. Instead, it may also use predicted throughput difference between Single-TRP and Multi-TRP to trigger this transition and distinguish cell-edge users from those near the cell center. The communication system may also decide about such transitions based on the UE location and mapping to a geographical region, wherein it may determine the UE location through a plurality of approaches such as RSRP, TDOA, AOA etc.

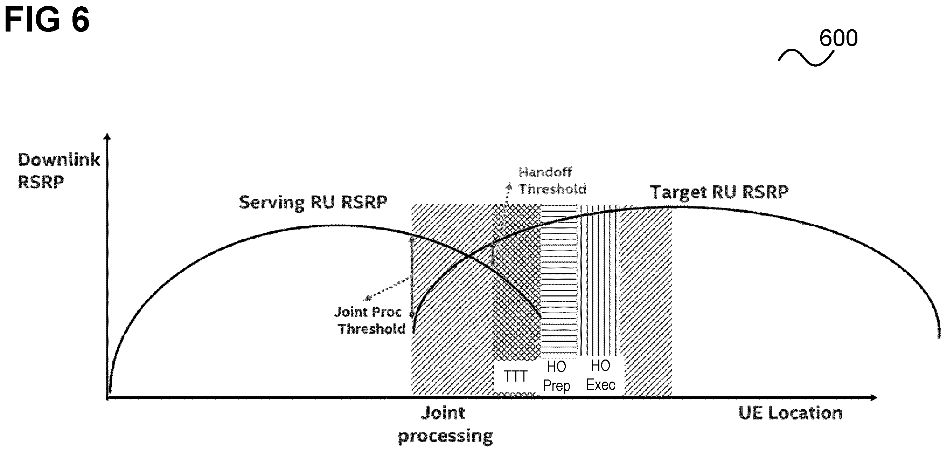

Figure 6 shows a diagram 600 illustrating UE-RU association based on RSRP in the context of Multi-TRP processing including a handover. For simplicity, a simple scenario of two TRPs is assumed here but the techniques extend to three, four or five TRPs performing joint processing.

The diagram 600 shows UE location against Downlink RSRP while the UE traverses through the sectors served by two RUs. The UE is initially attached to a first RU (denoted as "serving" RU - the second RU is denoted as "target" RU in view of the handover), and the communication network serves it by single cell processing. When the difference between serving RU RSRP and target RU RSRP increases above a certain threshold termed "Joint proc threshold", the communication network enables joint processing for the UE. It should be noted that only for the case of two TRPs, a RSRP comparison is sufficient while for L=3, 4 or 5 TRPs, the communication network uses RSRP or SINR coefficient of variation to trigger the transition. Regions hatched with rising diagonals indicate Multi-TRP processing in figure 6. UEs located in those regions are identified to be cell-edge users and the communication network uses joint processing for all such cell edge UEs to remove high interference.

Subsequently, when the RSRP difference between the target RU and the serving RU crosses a handoff threshold, the communication system initiates a handover procedure. The handover procedure involves a Time To Trigger (TTT) stage which monitors whether the RSRP difference between the target RU and the serving RU is consistently above the handoff threshold. If the TTT condition is met, the TRPs and the DU exchange measurement reports along with other necessary signaling. It should be noted that this could also involve handover related signaling between multiple DUs. This period of handover preparation is denoted as HO prep(aration). A successful preparation phase with measurement and signaling may then generate a handover command initiating the handover execution phase denoted as HO exec(uction). After successful handover, the UE is still in joint processing mode in the region hatched with falling diagonals in figure 6. This is because the communication system still identifies the UE as cell edge based on variation or comparison of RSRP. The communication network may route data and channel information through a different DU if the target RU is associated with a different DU than the serving RU. Based on the variation of measured RSRP, the UE eventually again moves from joint processing mode to single cell processing once the variation becomes strong.

In the example of figure 6, the series of serving modes is as follows: TRPSet 1 (Single cell processing) -> TRPSet 1 (Joint processing) -> Handover -> TRPSet 2 (Joint processing) -> TRPSet 2 (Single processing)

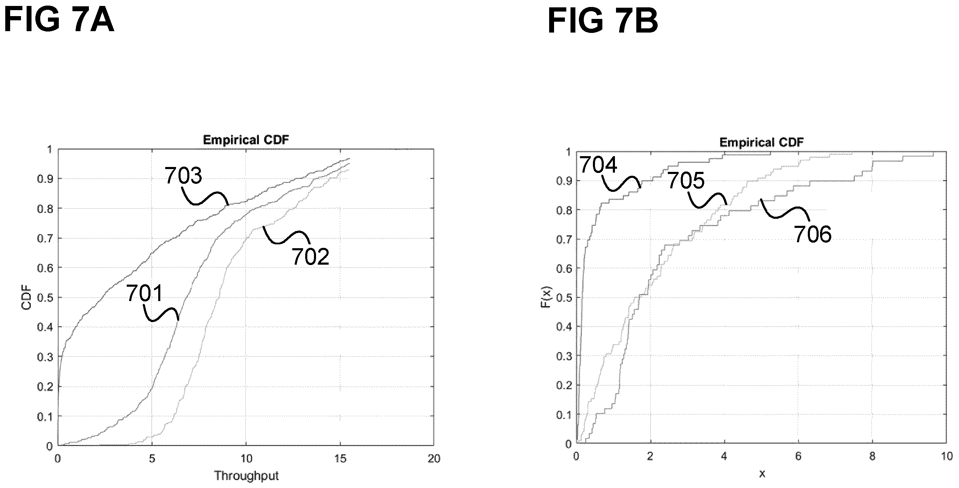

Figure 7A illustrates the benefits of joint processing on the uplink with three (first curve 701) or five (second curve 702) coordinating TRPs as compared to single cell-processing (third curve 703). The shown results were generated using a total of eleven TRPs in system simulations with four UEs per cell dropped randomly. While simulation results are shown here for uplink only, similar improvements could be observed on the downlink too. Full buffer traffic was assumed, and clustering was performed using the strongest three or five TRPs. The curves 701 to 703 show the Cumulative distribution function (CDF) of the UE throughput for various cases to highlight the gains observed in cell center or cell edges. For the case of joint processing with three TRPs, roughly 37% throughput improvement was observed for cell center users while about 72% throughput improvement was observed for cell edge users. Practical synchronization issues due to mis-calibration of various offsets could reduce the performance improvement by a factor of 5%.

Figure 7B illustrates the Uplink throughput results with eleven cells activated with joint processing across three strongest RUs or TRPs. Similar to figure 7a, each cell has four UEs randomly dropped, leading to a total of 44 users. In figure 7B, the first curve 704 indicates single cell processing whereas the second curve 705 corresponds to UE centric processing at DU wherein three strongest TRPs are chosen for each user. Substantial gains are observed owing to joint processing that helps remove the interference considerably. The second curve 705 ("Joint + Single") corresponds to the case where the communication network chooses 50% of users for single cell processing due to proximity to the cell center and remaining 50% users for joint processing with three TRPs (cell edge users). It should be noted that the second curve 705 and the third curve 706 being close to each other signifies the low impact of avoiding joint processing for cell center users. Avoiding joint processing for cell center users helps reducing the RAN implementation complexity as well as the front haul bandwidth for sharing data and control information. The complexity could be reduced to a maximum of 58% over traditional RAN architecture, by employing various aspects of this disclosure.

For uplink joint processing, the communication system may apply efficient UE transmission power control to mitigate near-far effect and control inter-user interference. A UE may increase its own signal power (received signal power at the RUs) but also increase interference to other UEs. The communication system may choose UE power based on targeted receive power for signal quality requirements. The communication system may apply both open-loop and close-loop options for single-cell processing systems. For joint processing, the communication system may perform power control after UE-RU association. Instead of controlling targeted power for one specific RU, the power control strategy can consider total receive power across multiple RUs. One power control mechanism is to adjust UEs' total receive power across associated RUs on a similar level. The communication system may apply other power control strategies based on various system design targets.

When considering hexagonal pattern with three TRPs per cell (as in the above examples), there are six CJT regions improving performance in the cell edges. Capacity for these regions is improved by three adjacent TRPs performing joint transmission. For all the other cell edges outside these six CJT regions, there is interference due to transmission from only two adjacent TRPs (i.e. TRPs serving adjacent sectors). However, instead of separate joint processing, one of the TRPsets (CJT regions) can perform power control adaptively so that these cell edge regions also have improved throughput performance via joint transmission. To this end, the communication system may set transmit power for one of the three coordinating TRPs to zero when precoding data for specific UE.

In essence, the communication system may base power allocation on RSRP measurements of multiple TRPs within each TRP set and with suitable thresholds. Instead of conducting power control based on single TRP RSRP, the communication system may use RSRPs from multiple TRPs (i.e. RSRPs of reference signals received from multiple TRPs) jointly for power control decision making.

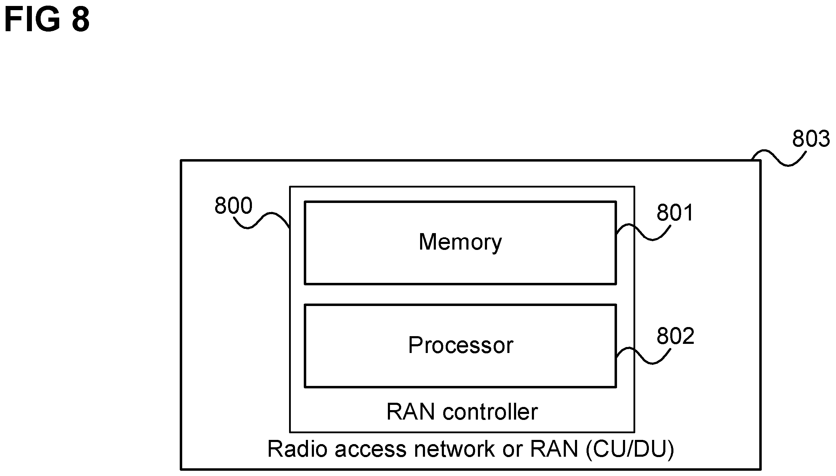

In summary, according to various aspects of this disclosure, a radio access network controller is provided as illustrated in figure 8.

Figure 8 shows a radio access network controller 800 according to an aspect of this disclosure.

The radio access network controller 800 is part of a radio access network 803 (e.g. of a CU or DU) and includes a memory 801 and a processor 802, wherein the processor 802 is configured to

- determine whether a mobile terminal is located at a center region of a radio cell of a communication network or an edge region of the radio cell, wherein the edge region is physically farther away from a base station serving the radio cell than the center region or mobile terminals in the edge region experience lower signal quality of signals from the base station as compared to the center region, and
- control the communication network to serve the mobile terminal by a plurality of radio units of a plurality of radio cells using coherent joint transmission by allocating the same time, frequency, code and spatial resources, if the processor determines that the mobile terminal is in the edge region of the radio cell; and
- control the communication network to serve the mobile terminal by one radio unit of the radio cell using single-cell processing if the processor determines that the mobile terminal is in the center region of the radio cell.

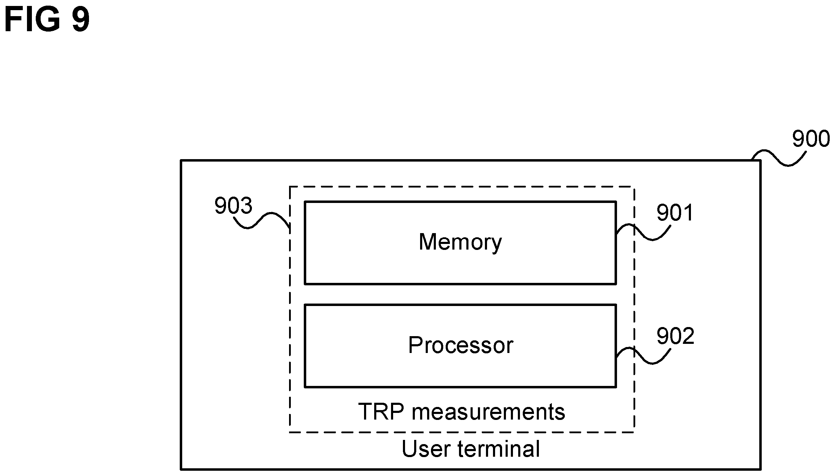

Figure 9 shows a mobile terminal 900 according to an aspect of this disclosure.

The mobile terminal 900 includes a memory 901 and a processor 902, the processor 902 configured to assist a communication network in identifying itself as cell-edge mobile terminal or a cell-center mobile terminal (e.g. by performing TRP measurements 903 such as RSRP or SINR measurements), wherein the edge region is physically farther away from a base station serving the radio cell than the center region or mobile terminals in the edge region experience lower signal quality of signals from the base station as compared to the center region.

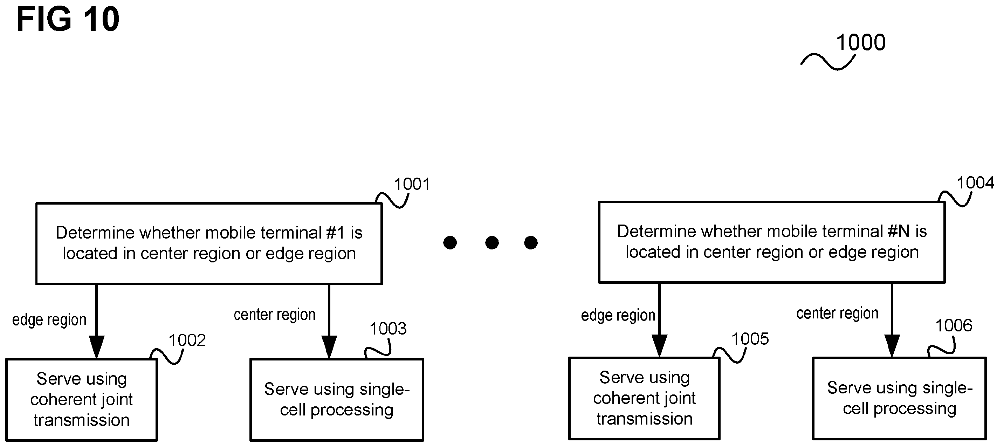

Figure 10 shows a flow diagram 1000 illustrating a method for controlling a communication network according to an aspect of this disclosure, e.g. performed by a radio access network controller.

In 1001, the radio access network controller determines whether a mobile terminal is located at a center region of a radio cell of a communication network or an edge region of the radio cell, wherein the edge region is physically farther away from a base station serving the radio cell than the center region or mobile terminals in the edge region experience lower signal quality of signals from the base station as compared to the center region.

In 1002, the radio access network controller controls the communication network to serve the mobile terminal by a plurality of radio units of a plurality of radio cells using coherent joint transmission by allocating the same time, frequency, code and spatial resources, if the processor determines that the mobile terminal is in the edge region of the radio cell.

In 1003, the radio access network controller controls the communication network to serve the mobile terminal by one radio unit of the radio cell using single-cell processing if the processor determines that the mobile terminal is in the center region of the radio cell.

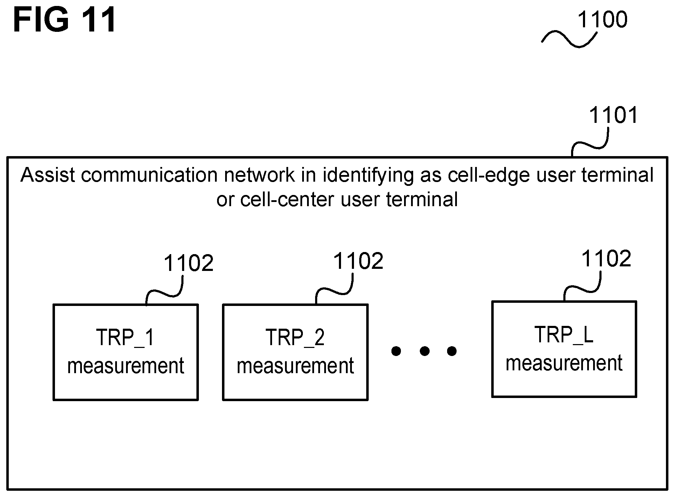

Figure 11 shows a flow diagram 1100 illustrating a method for using a communication network by a mobile terminal.

In 1101, the mobile terminal assists a communication network in identifying itself as cell-edge mobile terminal or a cell-center mobile terminal (e.g. by performing TRP measurements 1102 such as RSRP or SINR measurements), wherein the edge region is physically farther away from a base station serving the radio cell than the center region or mobile terminals in the edge region experience lower signal quality of signals from the base station as compared to the center region.

The radio access network controller and the mobile terminal (and their components) may for example be implemented by one or more processors. A "processor" may be understood as any kind of a logic implementing entity, which may be special purpose circuitry or a processor executing software stored in a memory, firmware, or any combination thereof. Thus a "processor" may be a hard-wired logic processor or a programmable logic processor such as a programmable processor, e.g. a microprocessor. A "processor" may also be a processor executing software, e.g. any kind of computer program. Any other kind of implementation of the respective functions which will be described in more detail below may also be understood as a "processor". The communication device may for example be at least partially implemented by a transceiver which may for example be at least partially implemented by a modem (e.g. a LTE or 5G or Wifi modem), a baseband processor or other transceiver components or also by an application processor. The communication device may for example be a communication terminal as such and may include typical communication terminal devices such as a transceiver (including e.g. a baseband processor, one or more filters, transmit chains, receive chains, amplifiers etc.), an antenna, a subscriber identity module, an application processor, a memory etc.

The communication network is for example a cellular mobile communication network.

The term "wireless device" or "user equipment", as used herein, includes, for example, a device capable of wireless communication, a communication device capable of wireless communication, a communication station capable of wireless communication, a portable or non-portable device capable of wireless communication, or the like. In some demonstrative aspects, a wireless device may be or may include a peripheral that is integrated with a computer, or a peripheral that is attached to a computer. In some demonstrative aspects, the term "wireless device" may optionally include a wireless service.

Examples, as described herein, may include, or may operate on, logic or a number of components, modules, or mechanisms. Modules are tangible entities (e.g., hardware) capable of performing specified operations and may be configured or arranged in a certain manner. In an example, circuits may be arranged (e.g., internally or with respect to external entities such as other circuits) in a specified manner as a module. In an example, the whole or part of one or more computer systems (e.g., a standalone, client or server computer system) or one or more hardware processors may be configured by firmware or software (e.g., instructions, an application portion, or an application) as a module that operates to perform specified operations. In an example, the software may reside on a communication device-readable medium. In an example, the software, when executed by the underlying hardware of the module, causes the hardware to perform the specified operations.

Accordingly, the term "module" is understood to encompass a tangible entity, be that an entity that is physically constructed, specifically configured (e.g., hardwired), or temporarily (e.g., transitorily) configured (e.g., programmed) to operate in a specified manner or to perform part or all of any operation described herein. Considering examples in which modules are temporarily configured, each of the modules need not be instantiated at any one moment in time. For example, where the modules comprise a general-purpose hardware processor configured using software, the general-purpose hardware processor may be configured as respective different modules at different times. Software may accordingly configure a hardware processor, for example, to constitute a particular module at one instance of time and to constitute a different module at a different instance of time.

Computing device hosting the radio unit (RU) or distributed unit (DU) may include a hardware processor (e.g., a central processing unit (CPU), a graphics processing unit (GPU), a hardware processor core, or any combination thereof), a main memory, a static memory, and mass storage device (e.g., hard drive, tape drive, flash storage, or other block or storage devices), some or all of which may communicate with each other via an interlink (e.g., bus).

The mass storage device may include a communication device-readable medium, on which is stored one or more sets of data structures or instructions (e.g., software) embodying or utilized by any one or more of the techniques or functions described herein. In some aspects, registers of the processor, the main memory, the static memory, and/or the mass storage device may be, or include (completely or at least partially), the device-readable medium, on which is stored the one or more sets of data structures or instructions, embodying or utilized by any one or more of the techniques or functions described herein. In an example, one or any combination of the hardware processor, the main memory, the static memory, or the mass storage device may constitute the device-readable medium.

The term "communication device-readable medium" may include any medium that is capable of storing, encoding, or carrying instructions for execution by the communication device and that cause the communication device to perform any one or more of the techniques of the present disclosure, or that is capable of storing, encoding, or carrying data structures used by or associated with such instructions. Non-limiting communication device-readable medium examples may include solid-state memories, and optical and magnetic media. Specific examples of communication device-readable media may include: non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; Random Access Memory (RAM); and CD-ROM and DVD-ROM disks. In some examples, communication device-readable media may include non-transitory communication device-readable media. In some examples, communication device-readable media may include communication device-readable media that is not a transitory propagating signal.

The instructions may further be transmitted or received over a communications network using a transmission medium via the network interface device utilizing any one of a number of transfer protocols (e.g., frame relay, internet protocol (IP), transmission control protocol (TCP), user datagram protocol (UDP), hypertext transfer protocol (HTTP), etc.). Example communication networks may include a local area network (LAN), a wide area network (WAN), a packet data network (e.g., the Internet), mobile telephone networks (e.g., cellular networks), Plain Old Telephone (POTS) networks, and wireless data networks (e.g., Institute of Electrical and Electronics Engineers (IEEE) 802.11 family of standards known as Wi-Fi®, IEEE 802.16 family of standards known as WiMax®), IEEE 802.15.4 family of standards, a Long Term Evolution (LTE) or 5G New Radio (NR) family of standards, a Universal Mobile Telecommunications System (UMTS) family of standards, peer-to-peer (P2P) networks, among others. In an example, the network interface device may include one or more physical jacks (e.g., Ethernet, coaxial, or phone jacks) or one or more antennas to connect to the communications network. In an example, the network interface device may include a plurality of antennas to wirelessly communicate using at least one of single-input multiple-output (SIMO), MIMO, or multiple-input single-output (MISO) techniques. In some examples, the network interface device 1820 may wirelessly communicate using Multiple User MIMO techniques.

The term "transmission medium" shall be taken to include any intangible medium that is capable of storing, encoding, or carrying instructions for execution by the communication device 1800, and includes digital or analog communications signals or other intangible medium to facilitate communication of such software. In this regard, a transmission medium in the context of this disclosure is a device-readable medium.

Discussions herein utilizing terms such as, for example, "processing", "computing", "calculating", "determining", "establishing", "analyzing", "checking", or the like, may refer to operation(s) and/or process(es) of a computer, a computing platform, a computing system, or other electronic computing device, that manipulate and/or transform data represented as physical (e.g., electronic) quantities within the computer's registers and/or memories into other data similarly represented as physical quantities within the computer's registers and/or memories or other information storage medium that may store instructions to perform operations and/or processes.

The following examples pertain to further exemplary implementations.

Example 1 is a radio access network controller in a communication network comprising: a memory and a processor, the processor configured to: determine whether a mobile terminal is located at a center region of a radio cell of a communication network or an edge region of the radio cell, wherein the edge region is physically farther away from a base station serving the radio cell than the center region or mobile terminals in the edge region experience lower signal quality of signals from the base station as compared to the center region, and control the communication network to serve the mobile terminal by a plurality of radio units of a plurality of radio cells using coherent joint transmission by allocating the same time, frequency, code and spatial resources, if the processor determines that the mobile terminal is in the edge region of the radio cell; and control the communication network to serve the mobile terminal by one radio unit of the radio cell using single-cell processing if the processor determines that the mobile terminal is in the center region of the radio cell.

Example 2 is the radio access network controller of example 1, wherein the processor is configured to control a distributed unit to process signals from the plurality of radio units, wherein the plurality of radio units serves a plurality of mobile terminals.

Example 3 is the radio access network controller of example 1 or 2, wherein the plurality of radio units is a cluster of radio units according to a clustering of radio units of the communication network of two, three or four adjacent radio units wherein the processor is configured to select the distributed unit from a set of distributed units based on a processing load of the distributed units.

Example 4 is the radio access network controller of any one of examples 1 to 3, wherein the processor is configured to determine whether the mobile terminal is located at the center region of the radio cell of the communication network or the edge region of the radio cell based on a coefficient of variation of reference signal received power observed by the mobile terminal of signals received from multiple radio units.

Example 5 is the radio access network controller of any one of examples 1 to 4, wherein the processor is configured to determine whether the mobile terminal is located at the center region of the radio cell of the communication network or the edge region of the radio cell based on a coefficient of variation of signal to interference and noise ratio observed by the mobile terminal of signals received from multiple radio units.

Example 6 is the radio access network controller of any one of examples 4 or 5, wherein the coefficient of variation of reference signal received power or signal to interference and noise ratio, respectively, is based on one of a plurality of downlink reference signals in 5G New Radio comprising Tracking Reference Signal, Position Reference Signal, Synchronization Signal and Channel State Information Reference Signal.

Example 7 is the radio access network controller of any one of examples 4 or 5, wherein the coefficient of variation of reference signal received power or signal to interference and noise ratio, respectively, is based on one of a plurality of uplink reference signals in 5G New Radio comprising Sounding Reference Signal and Demodulation Reference Signal.

Example 8 is the radio access network controller of any one of examples 4 or 5, wherein the reference signal received power or signal to interference and noise ratio, respectively, are based on a sub-band or a wideband signal transmission based on resource allocation.

Example 9 is the radio access network controller of example 5, wherein the signal to interference and noise ratio is based on power of signals and interference or diagonal terms of a channel covariance matrix.

Example 10 is the radio access network controller of example 5, wherein the processor is configured to determine whether the mobile terminal is located at the center region of the radio cell of the communication network or the edge region of the radio cell based on predicted throughput deduced from the signal to interference and noise ratio.

Example 11 is the radio access network controller of any one of examples 1 to 10, wherein the processor is configured to determine whether the mobile terminal is located at the center region of the radio cell of the communication network or the edge region of the radio cell based on a location of the mobile terminal based on at least one of a Time of Arrival, an Angle of Arrival and a reference signal received power technique.

Example 12 is the radio access network controller of any one of examples 4 to 11, wherein the processor is configured to control the communication network to perform joint processing for every moving mobile terminal before and after Handover based on reference signal received power or signal to interference and noise ratio with predefined thresholds.

Example 13 is the radio access network controller of example 12, wherein the thresholds are programmable to control the size of one or more joint processing regions.

Example 14 is the radio access network controller of any one of examples 1 to 13, wherein the processor is configured to perform a fairness based association of mobile terminals to radio units for a global clustering of radio units by initially selecting one radio unit for each mobile terminal followed by selecting one or more further radio units for each mobile terminal in a round-robin manner till a required number of radio units per mobile terminal has been reached.

Example 15 is the radio access network controller of any one of examples 1 to 14, wherein the processor is configured to allocate power to the plurality of radio units based on a plurality of measurements of reference signal received power and signal to interference and noise ratio from multiple radio units.

Example 16 is the radio access network controller of example 15, wherein the processor is configured to allocate power only to two radio units for certain regions instead of three or more radio units.

Example 17 is a mobile terminal, comprising: a memory and a processor, the processor configured to assist a communication network in identifying itself as cell-edge mobile terminal or a cell-center mobile terminal, wherein the edge region is physically farther away from a base station serving the radio cell than the center region or mobile terminals in the edge region experience lower signal quality of signals from the base station as compared to the center region.

Example 18 is the mobile terminal of example 17, wherein the mobile terminal is configured to perform downlink reference signal received power measurements of one of a plurality of downlink reference signals in 5G New Radio comprising Tracking Reference Signal, Position Reference Signal, Synchronization Signal or Channel State Information Reference Signal and the processor is configured to report results of the reference signal received power measurements to the communication network.

Example 19 is the mobile terminal of example 17 or 18, wherein the mobile terminal is configured to perform downlink signal to interference and noise ratio measurements based on Tracking Reference Signal, Position Reference Signal, Synchronization Signal or Channel State Information Reference Signal and the processor is configured to reports results of the signal to interference and noise ratio measurements to the communication network.

Example 20 is the mobile terminal of example 19, wherein the processor is configured to predict a throughput based on the signal to interference and noise ratio measurements and the processor is configured to forward the predicted throughput to the communication network.

Example 21 is the mobile terminal of any one of examples 17 to 20, wherein the processor is configured to forwards information about the mobile terminal's location to the communication network.

Example 22 is the mobile terminal of any one of examples 17 to 21, comprising a transmitter configured to transmit a Sounding Reference Signal or a Demodulation Reference Signal to the communication network to allow the communication network to measure a reference signal received power or signal to interference and noise ratio coefficient of variation.

Example 23 is the mobile terminal of any one of examples 17 to 22, wherein the processor is configured to co-ordinate the mobile terminal's transmit power based on power control commands from the communication network.

Example 24 is a method for controlling a communication network, comprising: determining whether a mobile terminal is located at a center region of a radio cell of a communication network or an edge region of the radio cell, wherein the edge region is physically farther away from a base station serving the radio cell than the center region or mobile terminals in the edge region experience lower signal quality of signals from the base station as compared to the center region, and controlling the communication network to serve the mobile terminal by a plurality of radio units of a plurality of radio cells using coherent joint transmission by allocating the same time, frequency, code and spatial resources, if it is determined that the mobile terminal is in the edge region of the radio cell; and controlling the communication network to serve the mobile terminal by one radio unit of the radio cell using single-cell processing if it is determined that the mobile terminal is in the center region of the radio cell.

Example 25 is a method for using a communication network by a mobile terminal, comprising: a mobile terminal assisting a communication network in identifying itself as cell-edge mobile terminal or a cell-center mobile terminal, wherein the edge region is physically farther away from a base station serving the radio cell than the center region or mobile terminals in the edge region experience lower signal quality of signals from the base station as compared to the center region.

It should be noted that one or more of the features of any of the examples above may be combined with any one of the other examples. In particular, features of examples described in context of a device are analogously valid in context of the corresponding method.

In the following, further examples are given. Any one of the further examples may be standalone but may also be combined with any one of the above examples 1 to 25.

Further example 1 is a communication network control component, including a memory and a processor, the processor configured to receive information about whether a mobile terminal is located at a center region of a radio cell or an edge region of a radio cell, wherein the edge region is further away from a base station serving the radio cell than the center region, and set an operational mode of a communication network to serve the mobile terminal by a plurality of radio units of different radio cells using coherent joint transmission in reaction to the case that the information indicates that the mobile terminal is in an edge region of the radio cell and set the operational mode of the communication network to serve the mobile terminal by one or more radio units of the radio cell using single-cell processing in reaction to the case that the information indicates that the mobile terminal is in the center region of the radio cell.

Further example 2 is the communication network control component of further example 1, wherein the processor is configured to, in reaction to the case that the information indicates that the mobile terminal is in an edge region of the radio cell, select the plurality of radio units by selecting a set of radio units from a plurality of pre-defined sets of radio units.

Further example 3 is the communication network control component of further example 2, wherein the plurality of radio units is a true sub-set of the selected set of radio units.

Further example 4 is the communication network control component of further example 3, wherein the processor is configured to set the operational mode of the communication network to serve the mobile terminal by the plurality of radio units by setting the transmit power of a radio unit that is a radio unit within the selected set of radio units but not part of the multiple radio units to or below a predefined minimum transmit power.

Further example 5 is the communication network control component of further example 3 or 4, wherein the processor is configured to set the operational mode of the communication network to serve the mobile terminal by a plurality of radio units which is a true sub-set of the selected set of radio units in reaction to the case that the information indicates that the mobile terminal is in a boundary region between fewer cells than the selected set of radio units includes radio units.

Further example 6 is the communication network control component of any one of further examples 2 to 5, wherein the plurality of radio units includes, for each radio cell of the communication network which is adjacent to another radio cell of the communication network in the boundary region, a radio unit which at least serves a sector of the radio cell at least partially covering the boundary region.

Further example 7 is the communication network control component of any one of further examples 2 to 6, wherein each pre-defined set of radio units includes multiple radio units.

Further example 8 is the communication network control component of any one of further examples 2 to 7, wherein, for each of the pre-defined set of radio units, each of the radio units that the pre-defined set of radio units includes serves a respective cell sector and the serving cell sectors served by the radio units that the pre-defined set of radio units includes are adjacent to each other.

Further example 9 is the communication network control component of any one of 2 to 8, wherein the processor is configured to select the plurality of radio units by selecting a set of radio units from the plurality of pre-defined sets of radio units which includes radio units serving cell sectors which each cover at least partially the cell edge region.

Further example 10 is the communication network control component of any one of further examples 2 to 9, wherein at least some of the pre-defined sets of radio units overlap.

Further example 11 is the communication network control component of any one of further examples 1 to 10, wherein the information is an indication about whether the mobile terminal is located at the center region of the radio cell or an edge region of a radio cell.

Further example 12 is the communication network control component of any one of further examples 1 to 11, wherein the information is a value which indicates a degree of the differences of the signal quality with which the mobile terminal receives a reference signal from different radio units of a set of radio units.

Further example 13 is the communication network control component of further example 12, wherein the processor is configured to set the operational mode of a communication network to serve the mobile terminal by the plurality of radio units of different radio cells using coherent joint transmission in reaction to the degree of the differences of the signal quality being below a predefined threshold and

to set the operational mode of the communication network to serve the mobile terminal by one or more radio units of the radio cell using single-cell processing else.

Further example 14 is the communication network control component of any one of further examples 1 to 13, wherein setting the operational mode of the communication network to serve the mobile terminal by one or more radio units of the radio cell includes setting the operational mode to serve the mobile terminal by a single radio unit or setting the operational mode of the communication network to serve the mobile terminal by radio units of different sectors of the radio cell.

Further example 15 is a mobile terminal, including a memory and a processor, the processor configured to determine an information about whether a mobile terminal is located at a center region of a radio cell of a communication network or an edge region of a radio cell of the communication network, communicate with the communication network by a plurality of radio units of different radio cells of the communication network using coherent joint transmission in reaction to the case that the information indicates that the mobile terminal is in an edge region of the radio cell and communicate with the communication network by one or more radio units of the radio cell in reaction to the case that the information indicates that the mobile terminal is in the center region of the radio cell.

Further example 16 is the mobile terminal of further example 15, including a transmitter configured to transmit a message to the communication network including the information.

Further example 17 is the mobile terminal of further example 15 or 16, wherein the processor is configured to derive the information from a reception of one or more reference signals from one or more radio units of the communication network.

Further example 18 is the mobile terminal of further example 17, wherein the reference signals are or include positioning signals.

Further example 19 is the mobile terminal of further example 18, wherein the processor is configured to perform positioning of the mobile terminal based on the reception of the positioning signals

Further example 20 is the mobile terminal of further example 18 or 19, wherein the information includes an indication of a position of the mobile terminal.

Further example 21 is the mobile terminal of further example 17, wherein the reference signals are or include pilot signals.

Further example 22 is the mobile terminal of further example 17, wherein the reference signals are or include pilot synchronization signals.

Further example 23 is a method for operating a communication network, including determining information about whether a mobile terminal is located at a center region of a radio cell or an edge region of a radio cell, wherein the edge region is further away from a base station serving the radio cell than the center region, and setting an operational mode of a communication network to serve the mobile terminal by a plurality of radio units of different radio cells using coherent joint transmission in reaction to the case that the information indicates that the mobile terminal is in an edge region of the radio cell and setting the operational mode of the communication network to serve the mobile terminal by one or more radio units of the radio cell using single-cell processing in reaction to the case that the information indicates that the mobile terminal is in the center region of the radio cell.

It should be noted that one or more of the features of any of the examples above may be combined with any one of the other examples.

While specific aspects have been described, it should be understood by those skilled in the art that various changes in form and detail may be made therein without departing from the spirit and scope of the aspects of this disclosure as defined by the appended claims. The scope is thus indicated by the appended claims and all changes which come within the meaning and range of equivalency of the claims are therefore intended to be embraced.

**Claims**

1. A radio access network controller in a communication network comprising:
   a memory and a processor, the processor configured to:

   determine whether a mobile terminal is located at a center region of a radio cell of a communication network or an edge region of the radio cell, wherein the edge region is physically farther away from a base station serving the radio cell than the center region or mobile terminals in the edge region experience lower signal quality of signals from the base station as compared to the center region, and

   control the communication network to serve the mobile terminal by a plurality of radio units of a plurality of radio cells using coherent joint transmission by allocating the same time, frequency, code and spatial resources, if the processor determines that the mobile terminal is in the edge region of the radio cell; and

   control the communication network to serve the mobile terminal by one radio unit of the radio cell using single-cell processing if the processor determines that the mobile terminal is in the center region of the radio cell.

2. The radio access network controller of claim 1,
   wherein the processor is configured to control a distributed unit to process signals from the plurality of radio units, wherein the plurality of radio units serves a plurality of mobile terminals.

3. The radio access network controller of any one of claims 1 or 2,
   wherein the plurality of radio units is a cluster of radio units according to a clustering of radio units of the communication network of two, three or four adjacent radio units wherein the processor is configured to select the distributed unit from a set of distributed units based on a processing load of the distributed units.

4. The radio access network controller of any one of claims 1 to 3,
   wherein the processor is configured to determine whether the mobile terminal is located at the center region of the radio cell of the communication network or the edge region of the radio cell based on a coefficient of variation of reference signal received power observed by the mobile terminal of signals received from multiple radio units.

**5.** The radio access network controller of any one of claims 1 to 4,
wherein the processor is configured to determine whether the mobile terminal is located at the center region of the radio cell of the communication network or the edge region of the radio cell based on a coefficient of variation of signal to interference and noise ratio observed by the mobile terminal of signals received from multiple radio units.

**6.** The radio access network controller of any one of claims 4 or 5,
wherein the coefficient of variation of reference signal received power or signal to interference and noise ratio, respectively, is based on one of a plurality of downlink reference signals in 5G New Radio comprising Tracking Reference Signal, Position Reference Signal, Synchronization Signal and Channel State Information Reference Signal.

**7.** The radio access network controller of any one of claims 4 to 6,

wherein the coefficient of variation of reference signal received power or signal to interference and noise ratio, respectively, is based on one of a plurality of uplink reference signals in 5G New Radio comprising Sounding Reference Signal and Demodulation Reference Signal; and/or
wherein the reference signal received power or signal to interference and noise ratio, respectively, are based on a sub-band or a wideband signal transmission based on resource allocation.

**8.** The radio access network controller of any one of claims 5 to 7,

wherein the signal to interference and noise ratio is based on power of signals and interference or diagonal terms of a channel covariance matrix; and/or
wherein the processor is configured to determine whether the mobile terminal is located at the center region of the radio cell of the communication network or the edge region of the radio cell based on predicted throughput deduced from the signal to interference and noise ratio.

**9.** The radio access network controller of any one of claims 1 to 8,
wherein the processor is configured to determine whether the mobile terminal is located at the center region of the radio cell of the communication network or the edge region of the radio cell based on a location of the mobile terminal based on at least one of a Time of Arrival, an Angle of Arrival and a reference signal received power technique.

**10.** The radio access network controller of any one of claims 4 to 9,

wherein the processor is configured to control the communication network to perform joint processing for every moving mobile terminal before and after Handover based on reference signal received power or signal to interference and noise ratio with predefined thresholds;
preferably wherein the thresholds are programmable to control the size of one or more joint processing regions.

**11.** The radio access network controller of any one of claims 1 to 10,
wherein the processor is configured to perform a fairness based association of mobile terminals to radio units for a global clustering of radio units by initially selecting one radio unit for each mobile terminal followed by selecting one or more further radio units for each mobile terminal in a round-robin manner till a required number of radio units per mobile terminal has been reached.

**12.** The radio access network controller of any one of claims 1 to 11,

wherein the processor is configured to allocate power to the plurality of radio units based on a plurality of measurements of reference signal received power and signal to interference and noise ratio from multiple radio units;
preferably wherein the processor is configured to allocate power only to two radio units for certain regions instead of three or more radio units.

**13.** A mobile terminal, comprising:

a memory and a processor, the processor configured to
assist a communication network in identifying itself as cell-edge mobile terminal or a cell-center mobile terminal, wherein the edge region is physically farther away from a base station serving the radio cell than the center region or mobile terminals in the edge region experience lower signal quality of signals from the base station as compared to the center region.

14. The mobile terminal of claim 13,

wherein the mobile terminal is configured to perform downlink reference signal received power measurements of one of a plurality of downlink reference signals in 5G New Radio comprising Tracking Reference Signal, Position Reference Signal, Synchronization Signal or Channel State Information Reference Signal and the processor is configured to report results of the reference signal received power measurements to the communication network; and/or
wherein the mobile terminal is configured to perform downlink signal to interference and noise ratio measurements based on Tracking Reference Signal, Position Reference Signal, Synchronization Signal or Channel State Information Reference Signal and the processor is configured to reports results of the signal to interference and noise ratio measurements to the communication network.

15. A method for controlling a communication network, comprising:

determining whether a mobile terminal is located at a center region of a radio cell of a communication network or an edge region of the radio cell, wherein the edge region is physically farther away from a base station serving the radio cell than the center region or mobile terminals in the edge region experience lower signal quality of signals from the base station as compared to the center region, and
controlling the communication network to serve the mobile terminal by a plurality of radio units of a plurality of radio cells using coherent joint transmission by allocating the same time, frequency, code and spatial resources, if it is determined that the mobile terminal is in the edge region of the radio cell; and
controlling the communication network to serve the mobile terminal by one radio unit of the radio cell using single-cell processing if it is determined that the mobile terminal is in the center region of the radio cell.

FIG 1

# FIG 2

200

201

201

201

201

201

201

201

EP 4 693 919 A2

# FIG 3

EP 4 693 919 A2

FIG 4

FIG 5

# FIG 6

~600

**Downlink RSRP**

**Serving RU RSRP**

Handoff Threshold

**Target RU RSRP**

Joint Proc Threshold

TTT | HO Prep | HO Exec

**Joint processing**

**UE Location**

EP 4 693 919 A2

# FIG 7A

**Empirical CDF**

703

701

702

CDF

Throughput

# FIG 7B

**Empirical CDF**

704

705

706

F(x)

x

EP 4 693 919 A2

# FIG 8

EP 4 693 919 A2

# FIG 9

EP 4 693 919 A2

# FIG 10

1000

Determine whether mobile terminal #1 is located in center region or edge region — 1001

● ● ●

Determine whether mobile terminal #N is located in center region or edge region — 1004

edge region

center region — 1003

1002

Serve using coherent joint transmission

Serve using single-cell processing

edge region

center region — 1006

1005

Serve using coherent joint transmission

Serve using single-cell processing

EP 4 693 919 A2

# FIG 11

1100

1101

Assist communication network in identifying as cell-edge user terminal or cell-center user terminal

1102

TRP_1
measurement

1102

TRP_2
measurement

• • •

1102

TRP_L
measurement